# EUROPEAN PATENT APPLICATION

(11) **EP 1 571 042 A1**
(43) Date of publication of application: **07.09.2005**
(21) Application number: 05075435.7
(22) Date of filing: 23.02.2005
(51) Int. Cl.: B60R 3/02

(54) **Folding step**

(30) Priority: 05.03.2004 BE 200400120
(71) Applicant: N.V. Henschel Engineering S.A., naamloze vennootschap, 2610 Wilrijk (BE)
(72) Inventor: Noukens, Edwin, 2160 Wilrijk (BE)
(74) Representative: Donné, Eddy

(57) **Abstract**

Folding step consisting of at least a support (3-3) upon which a treadboard (2) is hinge-mounted around pins (7) of the support (3-3) which extend in bushes (22) of the treadboard (2), whereby this treadboard (2) is hinge-mounted between an upward folded storage position and a downward folded horizontal, or practically horizontal position of use, whereby clamping means are provided to lock the treadboard (2) in the storage position and whereby, in the position of use, the treadboard (2) rests against a stop, characterised in that it is provided with means to absorb any possible vibrations of the treadboard (2).

## Description

The present invention concerns a folding step, more particularly a step which is used to step in and out of a loading space of a vehicle in a safe and comfortable manner.

It is known that existing folding steps are made of sheet metal and are provided with a support which is equipped with a hinge pin around which the treadboard hinges.

Further, it is known that the known folding step comprises means to lock the actual treadboard in its storage position, as well as a stop against which the actual treadboard rests in its position of use.

A disadvantage is that such known folding steps usually make a lot of noise as a result of shocks and vibrations caused while riding.

Another disadvantage is that, in case the step is provided with a protective layer, this protective layer will be damaged after a while as a result of frictional vibrations between the actual treadboard and the support, and at the shaft passages of the hinge pin of the treadboard, such that corrosion may occur in these places, which is first of all not aesthetic and moreover may lead to dangerous situations.

Another disadvantage is that when the treadboard is folded down into its position, this is usually accompanied with a heavy blow due to the contact of metal on metal.

The present invention aims a folding step which totally excludes the above-mentioned disadvantages.

To this aim, the present invention concerns a folding step consisting of at least a support onto which a treadboard is hinge-mounted around pins of said support which extend in bushes of the treadboard, whereby this treadboard is hinge-mounted between an upward folded storage position and a downward folded horizontal, or practically horizontal position of use, whereby clamping means are provided to lock the treadboard in the storage position and whereby, in the position of use, the treadboard rests against a stop, characterised in that it is provided with means to absorb any possible vibrations of the treadboard.

The above-mentioned means for absorbing vibrations preferably consist in that the treadboard is bearing-mounted on the above-mentioned shaft by means of plastic bushes, and which extend through the above-mentioned passage in the treadboard.

According to another preferred characteristic, the above-mentioned means for absorbing vibrations consist of plastic rings which are provided over the shaft and between the treadboard and the support.

Such plastic rings can be made as a collar of the plastic bushes.

According to another preferred characteristic, the above-mentioned clamping means are formed of a resilient lip of the support, and the means for absorbing vibrations are formed of a plastic element provided on the treadboard and which can work in conjunction with the lip.

More particularly, the above-mentioned plastic element may be a plastic pin provided on a side edge of the treadboard.

According to another preferred characteristic, the above-mentioned means for absorbing vibrations are formed in that the above-mentioned stop is formed of a plastic element (14) forming a stop which is provided on the support (3-3).

An advantage of the above-mentioned characteristics is that corrosion no longer occurs at the contact surfaces between the support and the treadboard.

Another advantage is that, by making use of parts made of plastic, the vibrations between the support and the treadboard are damped, resulting in that no annoying noises are produced.

In order to better explain the characteristics of the present invention, the following preferred embodiment of a folding step according to the invention is described as an example only, with reference to the accompanying drawings, in which:
figure 1 shows a folding step according to the invention in perspective;
figure 2 represents a view in perspective of a folding step according to the invention, as disassembled;
figure 3 represents a section according to line III-III in figure 1;
figure 4 represents a section similar to that of figure 3, but when folded in;
figure 5 represents a section according to line V-V in figure 4, but for another position of the treadboard;
figures 6 and 7 each represent a section as in figure 5, but for two other positions;
figure 8 represents a section according to line VIII-VIII.

A folding step 1 according to the invention mainly consists of a support and a hinge-mounted treadboard 2.

The support is in this case formed of two angle sections 3 which can be each fixed against a caravan or the like with a flank 4, at a distance from each other, and which are provided with passages 5 for screws or the like to this end.

The other flanks 6 of said angle sections 3 are directed with their sides parallel to each other and they are provided with pins 7 situated opposite each other, on the sides directed towards each other, which are in this case formed of bushes formed in each other's prolongation on said flanks 6 by means of deep drawing, welding or the like.

Around said pins 7 are provided bearing bushes 8 made of plastic, which are provided with a collar 9 on one far end with which the bearing bushes 8 are pushed over the pins 7 up against the above-mentioned flanks 6.

The support 3-3 is provided with two elastic bending lips 10 which are in this case formed of a part at the far end of the flank 6 which is bound by a cross incision 11 in said flank 6.

At their free ends, the lips 10 are provided with an edge 12 folded slantingly back in the outward direction.

Connected onto this bevelled edge 12, the lips 10 on the sides turned towards each other are provided with a deepened part 13 which is formed in that the lips 10 at the height of this deepened part 13 are bent in a wavy manner.

At a distance under the above-mentioned pins 7 is provided in each of the above-mentioned angle sections 3 an element 14 forming a stop, made of plastic in the shape of a plate 15 with a standing rib 16, whereby the stop 14 is provided against the inner side of the angle section concerned with the plate 15 against the flank 4 and the rib 16 against the flank 6.

The element 14 forming a stop is snapped in on the angle section 3 by means of a pin 17 provided on the rib 16 and which can work in conjunction with an opening 18 in the flank 6 of the angle section 3 concerned.

In the given example, the treadboard 2 is formed of a plate with downward folded edges, a front edge 19 and two side edges 20 respectively.

In the side edges 20 are provided openings 21 opposite each other, and bushes 22 are formed on the sides of these edges 20 turned towards each other by means of deep drawing, welding or the like, which bushes 22 are provided coaxially in relation to the axis X-X' through the middle points of the openings 21.

On the outside of the side edges 20 of the treadboard 2 are provided elements in the shape of plastic pins 23, directed laterally outward, which are clamped in an opening 25 in these side edges 20 with one narrowed far end.

The use of a step according to the invention is very simple and as follows.

When being mounted on a caravan or the like, the step 1 is fixed on the caravan with its angle sections 3 by means of screwing or the like, whereby the treadboard 2 is provided between the flanks 6 of the angle sections 3, and the treadboard 2 is provided with its openings 21 in the side edges 20 and with its bushes 22 over the pins 7 and the bearing bushes 8, such that the treadboard 2 can hinge around these pins 7 and bearing bushes 8.

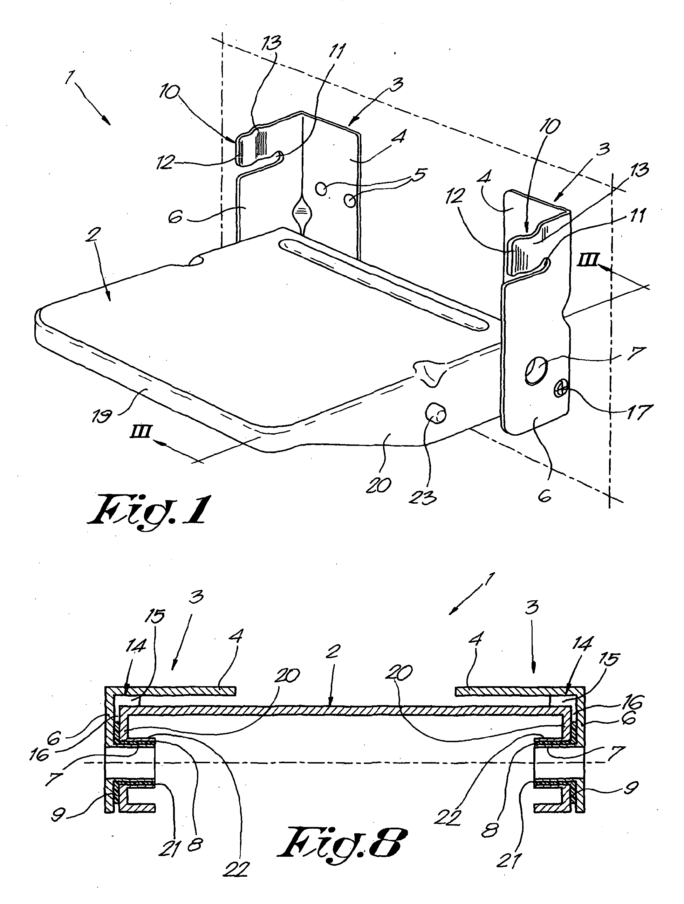

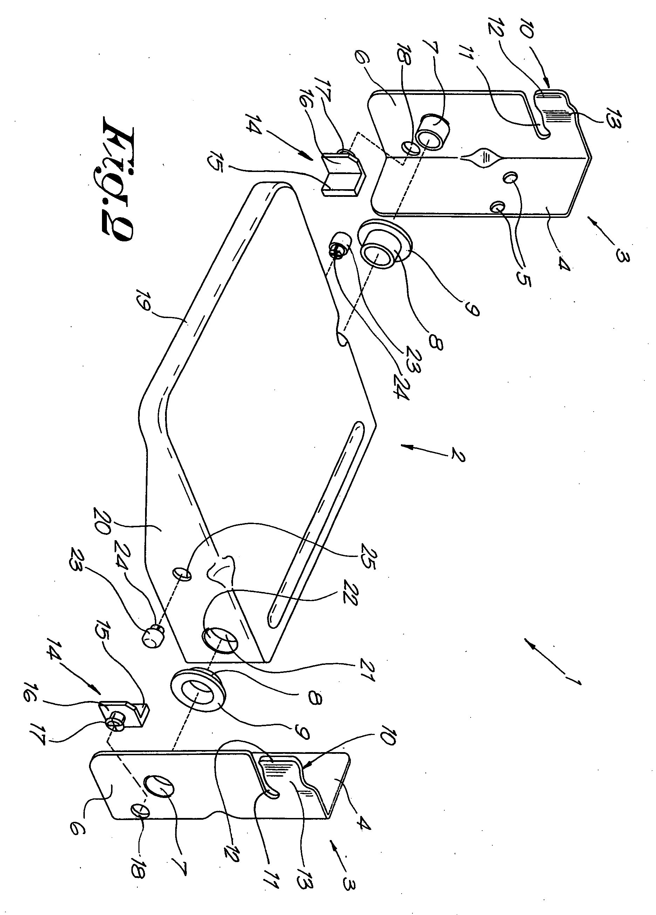

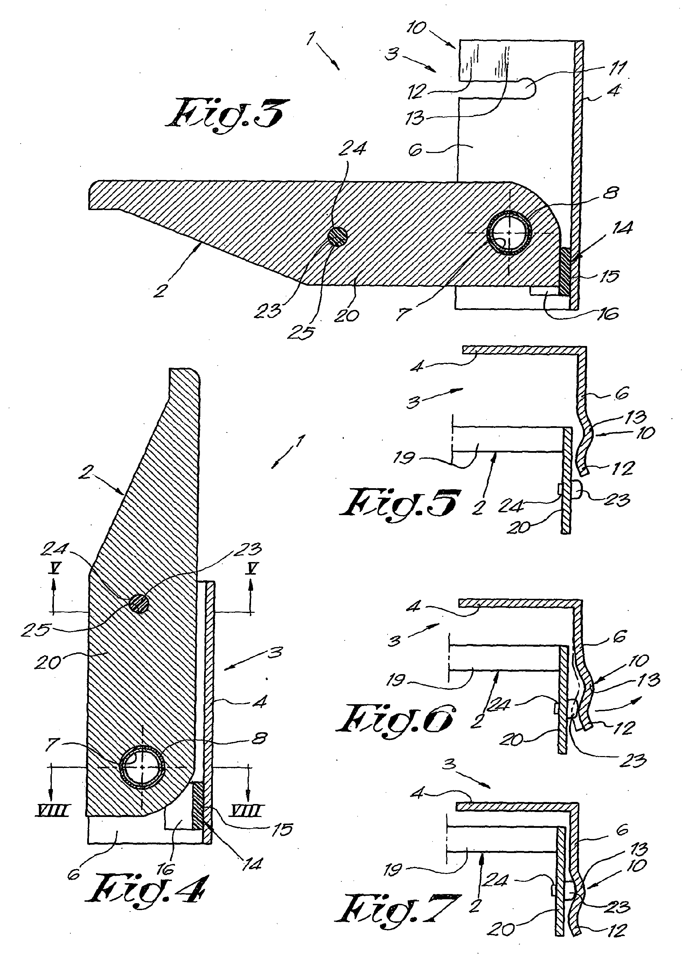

The treadboard 2 is hinge-mounted between two extreme positions, a downward folded horizontal or practically horizontal position of use, as represented in figures 1 and 3, and an upward folded storage position as represented in figure 4 respectively.

In the downward folded position of use, the treadboard 2 rests with the free ends of the edges 20 against the plate 15 of the plastic element 14 forming a stop.

When the treadboard 2 is tilted up as of this position of use, as is represented in successive steps in figures 5 to 7, the pin 23 makes contact with the bevelled edge 12 of the lips 10, such that, when the treadboard 2 is tilted further up, the lips 10 are pushed away from each other due to their elasticity until the pins 23, as the lips 10 spring back, are caught between the deepened parts 13 on the sides of the lips 10 directed towards the treadboard, such that the treadboard 2 is locked in an upward directed position.

With the clamping means formed by the lips 10 and the pins 23 working in conjunction with the latter, the treadboard 2 can thus be locked in the storage position.

Next, the treadboard 2 can be tilted back into the position of use, on condition that sufficient force is being exerted to unlock the above-mentioned clamping means again and to release the pins 23 again from the deepened parts 13, against the resilience of the lips 10.

It is clear that the treadboard 2 and the angle sections 3 do not make direct contact in any position whatsoever, but are always separated from each other by the plastic bearing bushes 8, rings which are formed by the collars 9 of these bearing bushes 8, the elements 14 forming a stop and the pins 23.

Also, it is perfectly clear that these elements 8, 9, 14 and 23 form means to absorb any vibrations of the treadboard 2, for example while riding, and to dampen them, such that annoying noises and possible wear due to frictions between the treadboard 2 and the support 3-3 can be avoided.

The plastic elements are preferably made of a relatively soft plastic, such as Teflon or the like, so as to better dampen the vibrations.

The pins 23 and the element 14 forming a stop can also be made of rubber.

It is clear that the present invention is by no means limited to the embodiment given as an example and described in the accompanying drawings; on the contrary, a folding step according to the invention can be made in all sorts of shapes and dimensions while still remaining within the scope of the invention.

## Claims

1. Folding step consisting of at least a support (3-3) upon which a treadboard (2) is hinge-mounted around pins (7) of the support (3-3) which extend in bushes (22) of the treadboard (2), whereby this treadboard (2) is hinge-mounted between an upward folded storage position and a downward folded horizontal, or practically horizontal position of use, whereby clamping means are provided to lock the treadboard (2) in the storage position and whereby, in the position of use, the treadboard (2) rests against a stop, **characterised in that** it is provided with means to absorb any possible vibrations of the treadboard (2).

2. Folding step according to claim 1, **characterised in that** the above-mentioned means for absorbing vibrations are formed of plastic bearing bushes (8) which are provided over the above-mentioned pins (7) of the support (3-3) and in the bushes (22) of the treadboard (2).

3. Folding step according to claim 1, **characterised in that** the means for absorbing vibrations comprise plastic rings which are provided over the pins (7) and between the treadboard (2) and the support (3-3).

4. Folding step according to claim 2 and 3, **characterised in that** the rings are formed of a collar (9) of the plastic bearing bushes (8).

5. Folding step according to claim 1, **characterised in that** the clamping means are formed by a resilient lip (10) of the support (3-3) and **in that** the means for absorbing vibrations comprise a plastic or rubber element which is provided on the treadboard (2) and which can work in conjunction with the lip (10).

6. Folding step according to claim 5, **characterised in that** the above-mentioned element is a pin (23) which is provided on a side edge (20) of the treadboard (2).

7. Folding step according to claim 5, **characterised in that** the lip (10) is provided with an edge (12) on its free end, folded slantingly back in the outward direction.

8. Folding step according to claim 5, **characterised in that** the lip (10), on the side directed towards the treadboard (2), is provided with a deepened part (13) which can work in conjunction with the above-mentioned element (23) which is provided on the treadboard (2).

9. Folding step according to claim 1,
**characterised in that** the above-mentioned means for absorbing vibrations are formed **in that** the above-mentioned stop is formed of a rubber or plastic element (14) forming a stop.

10. Folding step according to claim 7, **characterised in that** the element (14) forming a stop is provided on the support (3-3) and comprises a standing rib (16) which is situated between the side wall (20) of the treadboard (2) and the support (3-3).

11. Folding treadboard according to claim 1, **characterised in that** the pins (7) and the bushes (22) are formed by deep drawing.
